# EUROPEAN PATENT SPECIFICATION

(11) **EP 0 921 973 B1**
(45) Date of publication and mention of the grant of the patent: **17.04.2002**
(21) Application number: 97936916.2
(22) Date of filing: 28.08.1997
(51) Int. Cl.: B62D 21/02, B62D 65/00

(54) **VEHICLE FRAME AND METHOD OF ASSEMBLING IT**
FAHRZEUGRAHMEN UND SEIN HERSTELLUNGSVERFAHREN
CHASSIS DE VEHICULE ET PROCEDE D'ASSEMBLAGE ASSOCIE

(30) Priority: 30.08.1996 SE 9603146
(43) Date of publication of application: 16.06.1999
(73) Proprietor: Scania CV Aktiebolag (publ), 151 87 Södertälje (SE)
(72) Inventor: BOREHALL, Hans, S-641 47 Katrineholm (SE); EKLUND, Hans, S-641 51 Katrineholm (SE); JUNG, Lars, S-641 36 Katrineholm (SE)
(74) Representative: Waldebäck, Hans Olov
(86) International application number: SE9701430
(87) International publication number: WO9808725

(56) References cited:
- GB-A- 146 276
- US-A- 2 791 439
- US-A- 4 093 253

## Description

### Area of technology

The present invention relates partly to a vehicle frame, in accordance with the preamble to patent claim 1, and partly to a method of assembling it, in accordance with the preamble to patent claim 4.

### State of the art

A common practice in large vehicle frames, particularly for buses, 'is to begin by placing the longitudinal side members in their intended mutual position, followed by fitting the requisite number of cross-members to the side members in various ways. One of the usual ways is to insert the cross-members sideways into apertures in the side members, followed by welding or soldering around the apertures in order to achieve proper strength. This method has disadvantages, however, with regard to access for welding and also makes the surface treatment of the vehicle frame difficult. See, for example, CH 302351, DE 801607 and GB 146 276 which shows a vehicle frame and a method as defined in the preamble of claim 1 and claim 4.

Even if welding is not adopted and permanent bolting is used instead, the fact that the latter cannot be applied to the cross-members until they are in position causes problems.

### Object of the invention

The object of the invention is to create a vehicle frame which is easy to assemble and which allows proper surface treatment of constituent parts before assembly. It is particularly desirable for environmental reasons to be able to powder coat constituent parts beforehand.

### Brief description of the invention

This object is achieved by the features set out in the characterising part of patent claim 1, and the method indicated in the characterising part of patent claim 4.

Designing the vehicle frame so that before assembly the cross-members are provided with requisite fastening devices and so that the side members can be pushed into position on the cross-members with clearance makes it possible to join them together by means of threaded connections. This means that surface treatment already carried out will suffice and not be destroyed during assembly. A particular advantage from an environmental point of view is that the constituent parts of the frame are powder coated before assembly. It also becomes possible to use simple and flexible assembly equipment.

Further features and advantages of the invention are indicated in the description below.

### List of drawings

Fig. 1 shows a perspective view of a vehicle frame according to the invention and

Fig. 2 shows a portion of a cross-member before the assembly of the vehicle frame.

### Description of preferred embodiments

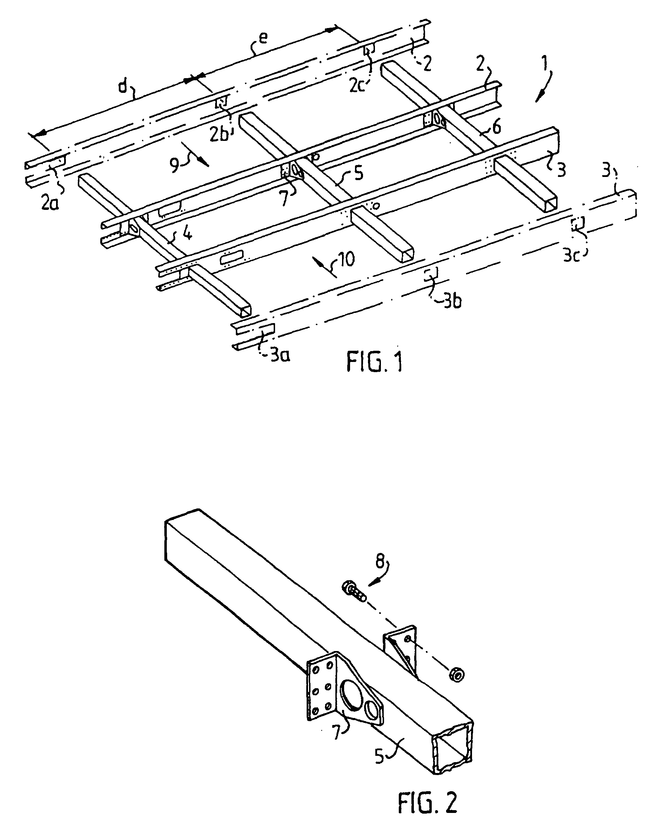

As may be seen in Fig. 1, a vehicle frame 1 according to the invention is composed of two elongated side members 2 and 3 and three shorter cross-members 4, 5 and 6. The side members 2 and 3 are at a certain mutual spacing and run in the longitudinal direction of the vehicle. The cross-members are arranged at right angles to the side members, through which they run and to which they are joined so that a rigid vehicle frame 1 is formed. To this end the side member 2 is provided with apertures 2a, 2b and 2c and the side member 3 is correspondingly provided with apertures 3a, 3b and 3c. These apertures are large enough for it to be possible to run the cross-members through them with clearance. On each of the cross-members there are fastening devices 7, here in the form of flanges, for joining side members and cross-members together by means of fastening elements 8 (see Fig. 2) in the form of bolts and nuts.

The cross-members to be used in the vehicle frame are provided beforehand with fastening devices 7, advantageously by welding, which fastening devices are with advantage arranged in pairs according to Fig. 2 and situated along the cross-members in such a way as to achieve the intended spacing between the side members at the time of assembly.

The side members to be used in the vehicle frame 1 are provided beforehand with the requisite number of apertures for cross-members and with the requisite number of holes for fastening elements 8. In this respect it is desirable from the outset to design the side members so that the same side member design can be used for different frame variants. This means that, for example, there may be alternative apertures for cross-members and hence also alternative holes for the fastening elements 8, depending on what is necessary or desired.

The procedure of assembling the vehicle frame 1 according to the invention starts with fixing the requisite number of cross-members (provided with necessary fastening devices 7) at the intended mutual spacings d, e and in the intended positions relative to one another. This is followed by placing the side members 2 and 3 in position by moving them in the transverse directions marked by the arrows 9 and 10 so that they abut against the fastening devices 7 and reach their intended positions on the cross-members 4,5 and 6. The next stage is to secure the fastening devices 7 and hence the cross-members to the side members by inserting bolts through the holes provided for the purpose. During this assembly operation it is important that the cross-members are inserted through the apertures intended for them in the side members with clearance in order to avoid damage to the surface treatment, which is with advantage applied to the relevant parts before the assembly operation. This makes it possible, for example, for these parts to be powder coated and keep their paintwork intact during the assembly operation, not least because welding to the side members is obviated.

The vehicle frame 1 here depicted is intended, together with its long cross-members 2,3, to form part of a bus. Depending on the length of the bus, it may be desirable to connect two vehicle frames 1 of the type depicted by joining the side members together at suitable points in the vehicle. It is also possible to use two separate vehicle frames with a self-supporting vehicle body portion between them. The shape of the side members may of course be different from that here depicted. Depending on the design of the vehicle, they may for example be bent in various ways. Other types of sections may be used instead of channel sections.

The cross-members 4, 5 and 6 are depicted here with closed cross-sections, resulting in good rigidity, but other versions may also be desired. Assembling the vehicle frame 1 is facilitated if the portions of the cross-members 4, 5 and 6 which protrude beyond the side members 2, 3 are straight.

The type of fastening devices 7 may also be varied as necessary or desired. Where applicable, certain cross-members may be provided with a larger or smaller number of fastening devices than other cross-members, depending on their location in the vehicle.

Further parts not here depicted are subsequently fitted in a conventional manner to the vehicle frame 1 here depicted.

## Claims

1. Vehicle frame, particularly a bus frame, provided with two side members (2,3) which run in the longitudinal direction of the vehicle, are arranged at a certain mutual spacing and have running through them cross-members (4,5,6) which in their assembled position protrude sideways beyond the side members and are each fastened to both of the side members, and at least two of the cross-members having fastening devices (7) arranged at a spacing corresponding to the intended spacing between the side members, that these fastening devices (7) are designed to be connected to the side members (2,3) by connections (8), and the side members having apertures (2a,2b,2c,3a,3b,3c) which are intended for the cross-members and which are of such a size as to allow the side members to be moved, with clearance into position on the cross-members **characterized in that** said fastening devices (7) are preassembled with the cross-members, that said connections (8) are threaded connections and that the side members (2,3) and the cross-members (4,5,6) with fastening devices (7) mounted on them are powder coated before assembly commences.

2. Vehicle frame according to claim 1, **characterised in that** the cross-members (4,5,6) are of closed cross-section.

3. Vehicle frame according to any one of claims 1-2, **characterised in that** the cross-members (4,5,6) are straight.

4. Method of assembling a vehicle frame, particularly a bus frame, whereby the vehicle frame (1) incorporates two side members (2,3) which run in the longitudinal direction of the vehicle and are situated at a certain mutual spacing, and cross-members (4,5,6) which are situated at mutual spacings in the longitudinal direction of the vehicle, are introduced into apertures (2a,2b,2c,3a,3b,3c) in the side members and are thereafter fastened to the latter, **characterised in that** at least two of the cross-members (4,5,6) are provided, before the assembly of the vehicle frame (1), with fastening devices (7) situated at mutual spacings and intended to be joined to respective side members (2,3), that side members (2,3) and cross-members (4,5,6) are powder coated before being mutually assembled that the cross-members (4,5,6) are thereafter fixed at intended mutual spacings and that the side members (2,3) are thereafter moved into position on the cross-members with clearance relative to the latter, followed by the side members and cross-members being connected via the fastening devices (7) by means of threaded connections (8).

## Patentansprüche

1. Fahrzeugrahmen, insbesondere Omnibusrahmen, mit zwei Seitenteilen (2, 3) die sich in Längsrichtung des Fahrzeugs erstrecken, in einem bestimmten Abstand voneinander angeordnet sind und von Querteilen (4, 5, 6) durchdrungen sind, die in ihrem zusammengebauten Zustand seitlich über die Seitenteile hinausragen und je an beiden Seitenteilen befestigt sind, und von denen mindestens zwei Querteile Befestigungsvorrichtungen aufweisen, die in einem dem beabsichtigten Abstand zwischen den Seitenteilen entsprechenden Abstand angeordnet sind, wobei diese Befestigungsvorrichtungen (7) so gestaltet sind, dass sie an den Seitenteilen (2, 3) mittels Verbindungen (8) befestigbar sind, und die Seitenteile Öffnungen (2a, 2b, 2c, 3a, 3b, 3c) aufweisen, die für die Querteile bestimmt sind und von solcher Größe sind, dass die Seitenteile mit Spiel auf den Querteilen in Stellung bewegbar sind, **dadurch gekennzeichnet, dass** die Befestigungsvorrichtungen (7) mit den Querteilen vormontiert sind, dass die Verbindungen (8) Gewindeverbindungen sind und die Seitenteile (2, 3) sowie die Querteile (4, 5, 6) mit den an ihnen gebrachten Befestigungsvorrichtungen (7) pulverbeschichtet sind, ehe der Zusammenbau beginnt.

2. Fahrzeugrahmen nach Anspruch 1, **dadurch gekennzeichnet, dass** die Querteile (4, 5, 6) von geschlossenem Querschnitt sind.

3. Fahrzeugrahmen nach einem der Ansprüche 1-2, **dadurch gekennzeichnet, dass** die Querteile (4, 5, 6) gerade sind.

4. Verfahren zum Zusammenbauen eines Fahrzeugrahmens, insbesondere Omnibusrahmens, wobei der Fahrzeugrahmen (1) zwei Seitenteile (2, 3) aufweist, die sich in Längsrichtung des Fahrzeugs erstrecken und in einem bestimmten Abstand voneinander angeordnet sind, und Querteile (4, 5, 6), die in gegenseitigen Abständen, bezogen auf die Längsrichtung des Fahrzeugs, angeordnet werden, in Öffnungen (2a, 2b, 2c, 3a, 3b, 3c) in den Seitenteilen eingeführt und danach an diesen befestigt werden, **dadurch gekennzeichnet, dass** mindestens zwei der Querteile (4, 5, 6) vor dem Zusammenbau des Fahrzeugrahmens (1) mit Befestigungsvorrichtungen (7) versehen werden, die in gegenseitigen Abständen angeordnet und dazu bestimmt sind, mit jeweiligen Seitenteilen (2, 3) zusammengefügt zu werden, dass die Seitenteile (2, 3) und Querteile (4, 5, 6) pulverbeschichtet werden, bevor sie zusammengebaut werden, dass die Querteile (4, 5, 6) dann in vorbestimmten gegenseitigen Abständen befestigt werden und die Seitenteile (2, 3) danach auf den Querteilen mit Spiel in bezug auf diese in Stellung gebracht werden, woraufhin die Seitenteile und Querteile über die Befestigungsvorrichtungen (7) mittels Gewindeverbindungen (8) verbunden werden.

## Revendications

1. Cadre de châssis de véhicule, en particulier cadre de châssis d'autobus, doté de deux éléments latéraux (2, 3) qui s'étendent dans la direction longitudinale du véhicule, sont positionnés suivant un certain espacement mutuel et sont traversés par des traverses (4, 5, 6) qui, dans leur état assemblé, font saillie sur les côtés au-delà des éléments latéraux et sont chacune fixées aux deux éléments latéraux, étant précisé qu'au moins deux des traverses comportent des dispositifs de fixation (7) positionnés suivant un espacement correspondant à l'espacement prévu entre les éléments latéraux, que ces dispositifs de fixation (7) sont conçus pour être raccordés aux éléments latéraux (2, 3) par des organes de raccordement (8), et que les éléments latéraux présentent des ouvertures (2a, 2b, 2c, 3a, 3b, 3c) qui sont prévues pour les traverses et qui sont d'une dimension suffisante pour permettre aux éléments latéraux d'être amenés, avec un certain jeu, dans leur position sur les traverses, **caractérisé en ce que** lesdits dispositifs de fixation (7) sont préassemblés avec les traverses, **en ce que** lesdits organes de raccordement (8) sont des organes de raccordement à vis et **en ce que** les éléments latéraux (2, 3) et les traverses (4, 5, 6), avec les dispositifs de fixation (7) montés sur elles, sont revêtus de poudre avant que l'assemblage ne débute.

2. Cadre de châssis de véhicule selon la revendication 1, **caractérisé en ce que** les traverses (4, 5, 6) sont de section transversale fermée.

3. Cadre de châssis de véhicule selon l'une quelconque des revendications 1 et 2, **caractérisé en ce que** les traverses (4, 5, 6) sont rectilignes.

4. Procédé pour assembler un cadre de châssis de véhicule, en particulier un cadre de châssis d'autobus, le cadre de châssis de véhicule (1) comportant deux éléments latéraux (2, 3), qui s'étendent dans la direction longitudinale du véhicule et sont positionnés suivant un certain espacement mutuel, ainsi que des traverses (4, 5, 6) qui sont positionnées suivant des espacements mutuels dans la direction longitudinale du véhicule, sont introduites dans des ouvertures (2a, 2b, 2c, 3a, 3b, 3c) ménagées dans les éléments latéraux et sont ensuite fixées à ces derniers, **caractérisé en ce qu'**au moins deux des traverses (4, 5, 6) sont pourvues, avant l'assemblage du cadre de châssis de véhicule (1), de dispositifs de fixation (7) positionnés suivant des espacements mutuels et destinés à être reliés à des éléments latéraux respectifs (2, 3), **en ce que** les éléments latéraux (2, 3) et les traverses (4, 5, 6) sont revêtus de poudre avant d'être assemblés mutuellement, **en ce que** les traverses (4, 5, 6) sont ensuite immobilisées suivant les espacements mutuels prévus et **en ce que** les éléments latéraux (2, 3) sont ensuite amenés dans leur position sur les traverses, avec un certain jeu par rapport à ces dernières, à la suite de quoi les éléments latéraux et les traverses sont raccordés par l'intermédiaire des dispositifs de fixation (7), au moyen d'organes de raccordement à vis (8).
